# EUROPEAN PATENT APPLICATION

(11) **EP 1 933 565 A1**
(43) Date of publication of application: **18.06.2008**
(21) Application number: 06301257.9
(22) Date of filing: 14.12.2006
(51) Int. Cl.: H04N 7/26

(54) **Method and apparatus for encoding and/or decoding bit depth scalable video data using adaptive enhancement layer prediction**

(71) Applicant: THOMSON Licensing, 92100 Boulogne-Billancourt (FR)
(72) Inventor: Gao, Yongying, Chaoyang District Beijing 100101 (CN); Wu, Yuwen, Xuanwu District Beijing 100031 (CN); Doser, Ingo, Burbank, CA California 91504 (US)
(74) Representative: Hartnack, Wolfgang

(57) **Abstract**

A scalable video bitstream may have an H.264/AVC compatible base layer (BL) and a scalable enhancement layer (EL), where scalability refers to color bit depth. The SVC standard allows spatial inter-layer prediction, wherein a residual in the EL is generated which is then intra coded. Another spatial intra-coding mode for EL is pure intra coding (I_NxN). The invention discloses a new inter coding mode, comprising the steps of inter-coding (A_{1,BL}) BL data, reconstructing the encoded BL data to obtain reconstructed current BL data (BL_{rec,k}), upsampling (BDUp) these data, wherein the upsampling refers to bit depth and wherein a predicted version of EL data (Pre_{c}{BL_{rec}}) is obtained, generating a first EL residual (EL_{res1,k}), and intra coding said residual. Thus, a second EL residual (EL_{res2,k}) is obtained, which is then entropy encoded (EC_{EL}).

## Description

### Field of the invention

The invention relates to the technical field of digital video coding. It presents a coding solution for a novel type of scalability: bit depth scalability.

### Background

The video coding standard H.264/AVC provides various video coding modes and dynamic selection between them according to rate-distortion optimization (RDO). Its extension for Scalable Video Coding (SVC) provides different layers and supports for spatial scalability either direct encoding of the enhancement layer (EL), or inter-layer prediction. In direct encoding of the EL, a mode called I_NxN, redundancy between layers is not used: the EL is purely intra coded.

Inter-layer prediction is used in two coding modes, namely I_BL if the base layer (BL) is intra-coded, and residual prediction if the BL is inter-coded, so that BL and EL residuals are generated. With residual prediction, an EL residual is predicted from the BL residual.

For intra-coded EL macroblocks (MBs), the SVC supports two types of coding modes, namely original H.264/AVC I_NxN coding (spatial prediction, base_mode_flag=0) and I_BL, a special SVC coding mode for scalability where an EL MB is predicted from a collocated BL MB.

For inter-coding, the first step is generating BL and EL differential images called residuals. Residual inter-layer prediction is done for encoding the difference between the BL residual and the EL residual.

In recent years, higher color depth than the conventional eight bit color depth is more and more desirable in many fields, such as scientific imaging, digital cinema, high-quality-video-enabled computer games and professional studio and home theatre related applications. Accordingly, the state-of-the-art video coding standard H.264/AVC has included Fidelity Range Extensions (FRExt), which support up to 14 bits per sample and up to 4:4:4 chroma sampling.

For a scenario with two different decoders, or clients with different requests for the bit depth, e.g. 8 bit and 12 bit per sample for the same raw video, the existing H.264/AVC solution is to encode the 12-bit raw video to generate a first bitstream, and then convert the 12-bit raw video to an 8-bit raw video and encode it to generate a second bitstream. If the video shall be delivered to different clients who request different bit depths, it has to be delivered twice, e.g. the two bitstreams are put in one disk together. This is of low efficiency regarding both the compression ratio and the operational complexity.

A scalable solution for encoding the whole 12-bit raw video once to generate one bitstream may contain an H.264/AVC compatible BL and a scalable EL. Due to redundancy reduction, the overhead of the whole scalable bitstream on the above-mentioned first bitstream is small compared to the additional second bitstream. If an H.264/AVC decoder is available at the receiving end, only the BL sub-bitstream is decoded, and the decoded 8-bit video can be viewed on a conventional 8-bit display device; if a bit depth scalable decoder is available at the receiving end, both the BL and the EL sub-bitstreams may be decoded to obtain the 12-bit video, and it can be viewed on a high quality display device that supports color depths of more than eight bit.

### Summary of the Invention

The above-mentioned possibilities for redundancy reduction are not very flexible, considering that the efficiency of a particular encoding mode depends on the contents of the image. Different encoding modes may be optimized for different sequences. The efficiency of an encoding mode is higher if more redundancy can be reduced and the resulting bit-stream is smaller. The present invention provides a solution for this problem in the context of bit depth scalability, particularly when the corresponding base layer is Inter coded.

Claim 1 discloses a method for encoding scalable video data that allows improved redundancy reduction. Claim 5 discloses a corresponding decoding method.

A corresponding apparatus for encoding is disclosed in claim 7, and a corresponding apparatus for decoding is disclosed in claim 9.

The present invention provides both Intra and Inter coding modes for encoding the bit depth residual in bit depth scalable coding, by modifying the framework of spatial scalable coding that is adopted in the H.264/AVC scalable extension (SVC). It has been found by the inventors that coding the inter-layer residual directly can be more effective for bit depth scalable coding.

The intra coding mode uses encoding of the residual between bit depth upsampled reconstructed BL and original EL video (EL_{org} - Pre_{c}{BL_{rec}}). In principle, the inter-layer residual is treated as N-bit video to replace the original N-bit EL video. The residual predicted from BL is intra-coded and then transformed, quantized and entropy coded.

According to the invention, reconstructed BL information units (instead of original BL information units or BL residuals) are upsampled using bit depth upsampling, and the upsampled reconstructed BL information units are used to predict the collocated EL information units. This has the advantage that the prediction in the encoder is based on the same data that are available at the decoder. Thus, the differential information or residual that is generated in the encoder matches better the difference between the bit-depth upsampled decoded BL image at the decoder and the original EL image, and therefore the reconstructed EL image at the decoder comes closer to the original EL image.

Information units may be of any granularity, e.g. units of single pixels, pixel blocks, MBs or groups thereof. Bit depth upsampling is a process that increases the number or range of values that each pixel can have. Residual upsampling is a process that increases the number of pixels. The value corresponds usually to the color intensity of the pixel. Thus, fine tuned color reproduction possibilities are enhanced, and gradual color differences of the original scene can be better encoded and decoded for being reproduced. Advantageously the video data rate can be reduced compared to current encoding methods.

An encoder generates a residual from the original EL video data and bit depth upsampled reconstructed BL data, and the residual is additionally intra coded using spatial prediction, wherein a residual is generated which is then entropy encoded before it is transmitted, stored etc. The reconstructed BL information is upsampled at the encoder side and in the same manner at the decoder side, wherein the upsampling refers at least to bit depth.

The upsampling can be performed for intra coded as well as for inter coded BL images or MBs. However, different modes can be used for intra and inter coded images. Other than intra coded images or I-frames, inter coded images, also called P- or B-frames, need for their reconstruction other images, i.e. images with other picture order count (POC).

According to one aspect of the invention, a method for encoding video data having a base layer and an enhancement layer, wherein pixels of the base layer have less bit depth than pixels of the enhancement layer, comprises steps of encoding base layer data,
reconstructing the encoded base layer data, wherein reconstructed current base layer data are obtained, upsampling the reconstructed current base layer data, wherein the upsampling refers at least to bit depth and wherein a predicted version of enhancement layer data is obtained,
generating a first enhancement layer residual being a residual between original enhancement layer data and the predicted version of enhancement layer data,
intra coding said first enhancement layer residual, wherein a second enhancement layer residual is obtained, entropy encoding the encoded base layer data, and entropy encoding said second enhancement layer residual. The step of intra coding the first EL residual refers to the reduction of internal redundancy, e.g. spatial intra coding.

In one embodiment of the invention, the base layer signal is inter coded.

In one embodiment of the invention, said step of encoding base layer data comprises steps of
generating a base layer residual using current and reconstructed previous base layer data,
transforming and quantizing the base layer residual, inverse transforming and inverse quantizing the transformed and quantized base layer residual, wherein a reconstructed base layer residual is obtained, and
generating from the reconstructed base layer residual and said reconstructed previous base layer data reconstructed current base layer data.

In one embodiment of the invention, said step of upsampling also comprises spatial upsampling, e.g. texture upsampling.

According to another aspect of the invention, a method for decoding scalable video data having a base layer and an enhancement layer, wherein pixels of the base layer have less bit depth than pixels of the enhancement layer, comprises the steps of
receiving quantized and transformed enhancement layer information and base layer information,
performing inverse quantization and inverse transformation on the enhancement layer and base layer information, generating from the inverse quantized and inverse transformed base layer information reconstructed base layer information,
upsampling the reconstructed base layer information, wherein the bit depth per value is increased and wherein predicted enhancement layer information is obtained, generating from the inverse quantized and inverse transformed enhancement layer information first reconstructed enhancement layer information (namely a residual), wherein spatial prediction is used, and generating from the predicted enhancement layer information and the first reconstructed enhancement layer information second reconstructed enhancement layer information, which is then the decoded enhancement layer video.

In one embodiment of this aspect of the invention, the step of generating reconstructed base layer information comprises adding reconstructed motion compensated base layer information to the inverse transformed and inverse quantized base layer information.

According to one aspect of the invention, an apparatus for encoding video data having a base layer and an enhancement layer, wherein pixels of the base layer have less bit depth than pixels of the enhancement layer, comprises means for encoding base layer data,
means for reconstructing the encoded base layer data, wherein reconstructed current base layer data are obtained, means for upsampling the reconstructed current base layer data, wherein the upsampling refers at least to bit depth and wherein a predicted version of enhancement layer data is obtained,
means for generating a first enhancement layer residual being a residual between original enhancement layer data and the predicted version of enhancement layer data, means for intra coding said first enhancement layer residual, wherein a second enhancement layer residual is obtained, means for entropy encoding the encoded base layer data, and means for entropy encoding said second enhancement layer residual.

According to one embodiment of this aspect of the invention, the apparatus further comprises means for extracting from a received data stream an encoding mode indication, wherein the decoding according to the invention is enabled if the extracted encoding mode indication has a first value and disabled if the extracted encoding mode indication has a different second value.

According to one aspect of the invention, an apparatus for decoding scalable video data having a base layer and an enhancement layer, wherein pixels of the base layer have less bit depth than pixels of the enhancement layer, comprises
means for receiving quantized and transformed enhancement layer information and base layer information,
means for performing inverse quantization and means for performing inverse transformation on the received enhancement layer and base layer information,
means for generating from the inverse quantized and inverse transformed base layer information reconstructed base layer information, means for upsampling the reconstructed base layer information, wherein the bit depth per value is increased and wherein predicted enhancement layer information is obtained,
means for generating from the inverse quantized and inverse transformed enhancement layer information first reconstructed enhancement layer information, wherein spatial prediction is used, and
means for generating from the predicted enhancement layer information and the first reconstructed enhancement layer information second reconstructed enhancement layer information, namely decoded enhancement layer video.

According to one aspect of the invention, an encoded scalable video signal comprises encoded base layer data and encoded enhancement layer data, wherein the encoded enhancement layer data comprises a residual being the difference between a bit depth upsampled reconstructed inter coded base layer image and an enhancement layer image, the residual comprising differential bit depth information.

Advantageously, the encoding can be used for intra-coded as well as inter-coded base layer video data, since the reconstructed data used for prediction are the same.

Various embodiments of the presented coding solution are compatible to H.264/AVC and all kinds of scalability that are currently defined in H.264/AVC scalable extension (SVC).

Advantageous embodiments of the invention are disclosed in the dependent claims, the following description and the figures.

### Brief description of the drawings

Exemplary embodiments of the invention are described with reference to the accompanying drawings, which show in
Fig.1 a framework of color bit depth scalable coding;
Fig.2 an encoder for bit depth scalability using EL prediction based on reconstructed inter coded BL; and
Fig.3 a decoder for bit depth scalability using EL prediction based on reconstructed inter coded BL.

### Detailed description of the invention

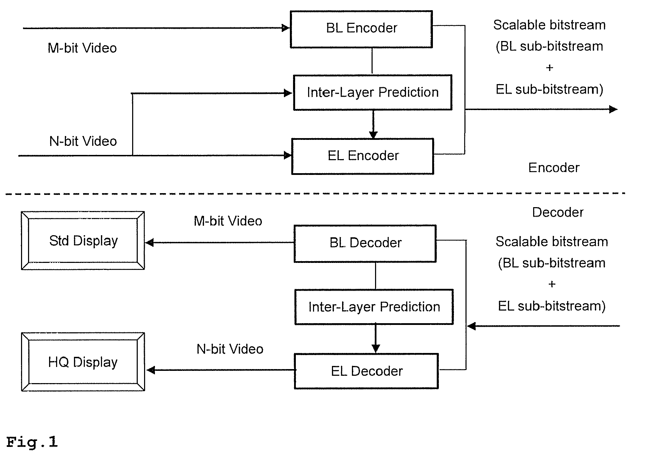

As shown in Fig.1, two videos are used as input to the video encoder: N-bit raw video and M-bit (M<N, usually M=8) video. The M-bit video can be either decomposed from the N-bit raw video or given by other ways. The scalable solution can reduce the redundancy between two layers by using pictures of the BL. The two video streams, one with 8-bit color and the other with N-bit color (N>8), are input to the encoder, and the output is a scalable bit-stream. It is also possible that only one N-bit color data stream is input, from which an M-bit (M<N) color data stream is internally generated for the BL. The M-bit video is encoded as the BL using the included H.264/AVC encoder. The information of the BL can be used to improve the coding efficiency of the EL. This is called *inter-layer prediction* herein. Each picture - a group of MBs - has two access units, one for the BL and the other one for the EL. The coded bitstreams are multiplexed to form a scalable bitstream. The BL encoder comprises e.g. an H.264/AVC encoder, and the reconstruction is used to predict the N-bit color video, which will be used for the EL encoding.

As shown in Fig 1, the scalable bit-stream exemplarily contains an AVC compliant BL bit-stream, which can be decoded by a BL decoder (conventional AVC decoder). Then the same prediction as in the encoder will be done at the decoder side (after evaluation of a respective indication) to get the predicted N-bit video. With the N-bit predicted video, the EL decoder will then use the N-bit prediction to generate the final N-bit video for a High Quality display HQ.

In the following, when the term color bit depth is used it means bit depth, i.e. the number of bits per value. This is usually corresponding to color intensity.

In one embodiment, the present invention is based on the current structure of SVC spatial, temporal and quality scalability, and is enhanced by bit depth scalability for enhanced color bit depth. Hence, this embodiment is compatible to the current SVC standard. However, it will be easy for the skilled person to adapt it to other standards.

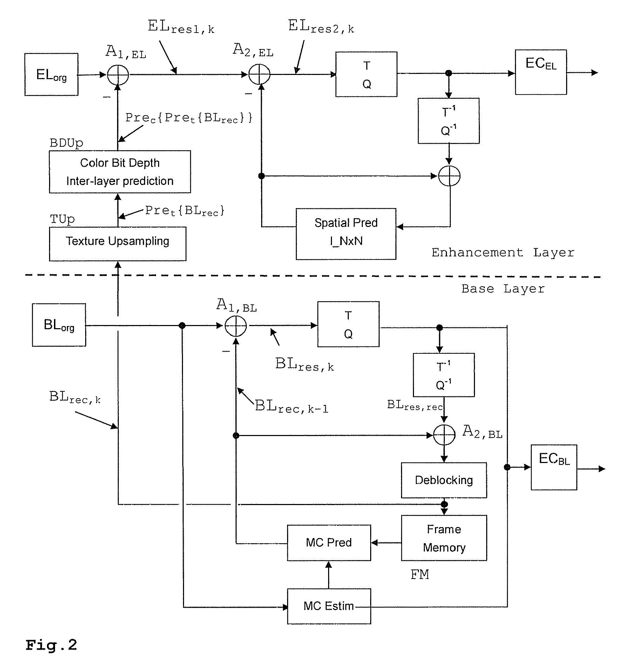

Fig.2 shows a framework for the novel Inter coding mode for enhancement layers using color bit depth scalable coding. An original BL signal BL_{org} is Inter coded, therefore a residual BL_{res,k} is generated which is the difference between the original BL signal and a reconstructed previous BL signal BL_{rec,k-1}. The residual BL_{res,k} is then transformed T (eg. DCT transformed) and quantized Q, before it is entropy coded EC_{BL} for usage, e.g. storage or transmission.

Further, the residual is inverse transformed T⁻¹ and inverse quantized Q⁻¹ , and the resulting reconstructed residual BL_{res,rec} is used to update A_{2,BL} a previously reconstructed BL image (or MB or other unit) BL_{rec,k-1}. The result is a reconstructed current BL image BL_{rec,k}, which is then stored in a memory FM, motion compensated MC and used to predict A_{1,BL} the next BL image and the next reconstructed BL residual.

Further, the reconstructed BL image BL_{rec,k} is also bit depth upsampled BDUp, which means that the bit depth (i.e. the possible value range) of each of its values (pixels) is increased. Various possibilities exist for this upsampling, e.g. bit shift (corresponding to a multiplication with a constant value, and then optionally also addition of a constant value, such as a median). Optionally, the reconstructed BL image BL_{rec,k} may also be spatially upsampled, e.g. texture upsampled as shown in Fig.2. In this case the order of the two (or more) upsampling steps can be any order, and it can even be adaptive. Respective indications may be inserted in the bitstream, so that it is possible for decoders to perform the correct type of reconstruction.

The bit depth upsampled reconstructed BL sample Pre_{c}{BL_{rec}} (or additionally texture upsampled reconstructed BL sample Pre_{c}{Preₜ{BL_{rec}}} or Preₜ{Pre_{c}{BL_{rec}}}) is then used to predict the current EL image EL_{org}, wherein a residual EL_{res1,k} is generated A_{1,EL}. This residual EL_{res1,k} is then further encoded, using spatial prediction. For this purpose another residual EL_{res2,k} is generated A_{2,EL} between said first residual EL_{res1,k} and a reconstructed previous EL residual EL_{rec,res,k-1}. This second residual EL_{res2,k} is then transformed T, quantized Q and entropy coded EC_{EL} for usage, e.g. transmission or storage.

For the above description it is clear that the upsampling is not restricted to full images, but can be performed on any image unit, e.g. pixel blocks such as MBs. The same applies to upsampling in decoders, since the same type of upsampling is used in encoders and decoders.

A difference of the novel inter coding mode from the existing inter coding mode in SVC is that according to the invention the prediction is generated from the reconstructed BL, while in the current SVC standard the BL is not reconstructed, just parsed and decoded.

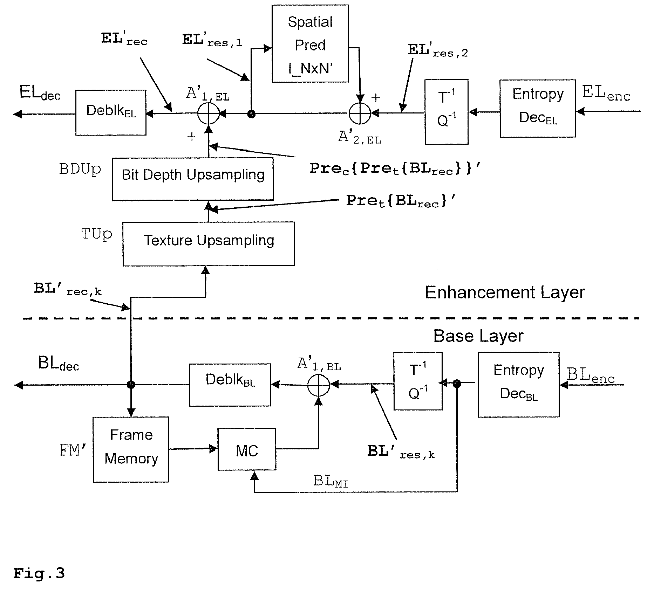

A corresponding decoder is shown in Fig.3. In the particular embodiment of Fig.3 the inter coded BL image is reconstructed from a residual BL'_{res,k} (or B-/P-frame) and a previously reconstructed image BL'_{rec,k-1}. The reconstructed current image BL'_{rec,k} is then spatially upsampled, using texture upsampling TUp and bit depth upsampled BDUp. The resulting prediction Pre_{c}{Preₜ{BL_{rec}}} is used to update A'_{1,EL} a reconstructed EL residual, which was obtained by intra decoding the received and then inverse quantized T⁻¹ and inverse transformed Q⁻¹ EL data EL'_{res,2}, wherein spatial prediction I_NxN, A'_{2,EL} is used. After this updating step A'_{1,EL}, the final reconstructed EL video is generated by deblocking Deblk_{EL}, which is a conventional H.264/AVC procedure.

As explained above, the texture upsampling step TUp is optional and only applicable where BL and EL have different spatial resolution, which is however independent from bit depth scalability.

For inter coded BL data, motion information BL_{MI} may be extracted from the entropy decoded input signal before inverse transform and inverse quantization, which is then provided to the motion compensation unit MC. Corresponding addition of motion information is performed in the encoder but is not shown in Fig.2.

An advantage of the present invention is that the inter-layer residual is encoded directly, and higher coding efficiency is achieved.

The invention can be used for scalable encoders, scalable decoders and scalable signals, particularly for video signals or other types of signals that have different quality layers and high inter-layer redundancy.

It will be understood that the present invention has been described purely by way of example, and modifications of detail can be made without departing from the scope of the invention. Each feature disclosed in the description and (where appropriate) the claims and drawings may be provided independently or in any appropriate combination. Features may (where appropriate) be implemented in hardware, software, or a combination of the two. Reference numerals appearing in the claims are by way of illustration only and shall have no limiting effect on the scope of the claims.

## Claims

1. Method for encoding video data having a base layer and an enhancement layer, wherein pixels of the base layer have less bit depth than pixels of the enhancement layer, comprising steps of
- encoding (A_{1,BL}, T, Q) base layer data (BL_{org});
- reconstructing (T⁻¹, Q⁻¹, A_{2,BL}) the encoded base layer data, wherein reconstructed current base layer data (BL_{rec,k}) are obtained;
- upsampling (BDUp) the reconstructed current base layer data, wherein the upsampling refers at least to bit depth and wherein a predicted version of enhancement layer data (Pre_{c}{Preₜ{BL_{rec}})) is obtained;
- generating a first enhancement layer residual (EL_{res1,k}) being a residual between original enhancement layer data (EL_{org}) and the predicted version of enhancement layer data (Pre_{c}{Preₜ{BL_{rec}}}) ;
- intra coding (A_{2,EL}, I_NxN) said first enhancement layer residual (EL_{res1,k}), wherein a second enhancement layer residual (EL_{res2,k}) is obtained;
- entropy encoding (EC_{BL}) the encoded base layer data; and
- entropy encoding (EC_{EL}) said second enhancement layer residual (EL_{res2, k}).

2. Method according to claim 1, wherein the base layer signal is inter coded.

3. Method according to claim 1 or 2, wherein the step of encoding base layer data comprises steps of
- generating (A_{1,BL}) a base layer residual (BL_{res,k}) using current (BL_{org}) and reconstructed previous (BL_{rec,k-1}) base layer data;
- transforming (T) and quantizing (Q) the base layer residual (BL_{res,k});
- inverse transforming (T⁻¹) and inverse quantizing (Q⁻¹) the transformed and quantized base layer residual, wherein a reconstructed base layer residual (BL_{res,rec}) is obtained; and
- generating (A_{2,BL}) from the reconstructed base layer residual and said reconstructed previous base layer data (BL_{rec,k-1}) reconstructed current base layer data (BL_{rec,k}).

4. Method according to one of the claims 1-3, wherein the step of upsampling also comprises spatial upsampling (RUp).

5. Method for decoding scalable video data having a base layer and an enhancement layer, wherein pixels of the base layer have less bit depth than pixels of the enhancement layer, comprising the steps of
- receiving quantized and transformed enhancement layer information and base layer information;
- performing inverse quantization (Q⁻¹) and inverse transformation (T⁻¹) on the received enhancement layer and base layer information;
- generating (A'_{1,BL}, Deblk_{BL}, FM', MC) from the inverse quantized and inverse transformed base layer information (BL'_{res,k}) reconstructed base layer information (BL'_{rec,k}) ;
- upsampling (BDUp) the reconstructed base layer information (BL'_{rec,k}), wherein the bit depth per value is increased and wherein predicted enhancement layer information (Pre_{c}{Preₜ{BL'_{rec}}}) is obtained;
- generating (A'_{2,EL}) from the inverse quantized and inverse transformed enhancement layer information (EL'_{res,2}) first reconstructed enhancement layer information (EL'_{res,1}), wherein spatial prediction (I_NxN') is used; and
- generating (A'_{1,EL}) from the predicted enhancement layer information (Pre_{c}{Preₜ{BL'_{rec}}}) and the first reconstructed enhancement layer information (EL' _{res,1}) second reconstructed enhancement layer information (EL'_{rec}).

6. Method according to claim 5, wherein the step of generating (A_{1,BL}, Deblk_{BL}, FM' ,MC) reconstructed base layer information (BL'_{rec,k}) comprises adding (A'_{1,BL}) reconstructed, motion compensated (MC) base layer information to the inverse transformed and inverse quantized base layer information (BL'_{res,k}).

7. Apparatus for encoding video data having a base layer and an enhancement layer, wherein pixels of the base layer have less bit depth than pixels of the enhancement layer, comprising
- means (A_{1,BL}, T,Q) for encoding base layer data (BL_{org});
- means (T⁻¹, Q⁻¹, A_{2,BL}) for reconstructing the encoded base layer data, wherein reconstructed current base layer data (BL_{rec,k}) are obtained;
- means (BDUp) for upsampling the reconstructed current base layer data, wherein the upsampling refers at least to bit depth and wherein a predicted version of enhancement layer data (Pre_{c}{BL_{rec,k}}) is obtained;
- means (A_{1,EL}) for generating a first enhancement layer residual (EL_{res1,k}) being a residual between original enhancement layer data (EL_{org}) and the predicted version of enhancement layer data (Pre_{c}{BL_{rec,k}}) ;
- means (A_{2,EL}, I_NxN) for intra coding said first enhancement layer residual (EL_{res1,k}), wherein a second enhancement layer residual (EL_{res2,k}) is obtained;
- means (EC_{BL}) for entropy encoding the encoded base layer data; and
- means (EC_{EL}) for entropy encoding said second enhancement layer residual (EL_{res2,k}).

8. Apparatus according to claim 7, further comprising means for extracting from a received data stream an encoding mode indication, wherein the decoding is enabled if the extracted encoding mode indication has a first value and disabled if the extracted encoding mode indication has a different second value.

9. Apparatus for decoding scalable video data having a base layer and an enhancement layer, wherein pixels of the base layer have less bit depth than pixels of the enhancement layer, comprising
- means for receiving quantized and transformed enhancement layer information and base layer information;
- means (Q⁻¹) for performing inverse quantization and means (T⁻¹) for performing inverse transformation on the received enhancement layer and base layer information;
- means (A_{1BL}, Deblk_{BL}, FM', MC) for generating from the inverse quantized and inverse transformed base layer information (BL'_{res,k}) reconstructed base layer information (BL'_{rec,k});
- means (BDUp) for upsampling the reconstructed base layer information (BL'_{rec,k}), wherein the bit depth per value is increased and wherein predicted enhancement layer information (Pre_{c}{Preₜ{BL'_{rec}}}) is obtained;
- means (A'_{2,EL}) for generating from the inverse quantized and inverse transformed enhancement layer information (EL'_{res,2}) first reconstructed enhancement layer information (EL'_{res,1}), wherein spatial prediction (I_NxN') is used; and
- means (A'_{1,EL}) for generating from the predicted enhancement layer information (Pre_{c}{Preₜ{BL'_{rec}}}) and the first reconstructed enhancement layer information (EL'_{res,1}) second reconstructed enhancement layer information (EL'_{rec}).

10. Encoded scalable video signal comprising encoded base layer data and encoded enhancement layer data, wherein the encoded enhancement layer data comprises a residual (EL_{res1,k}, EL_{res2,k}) being the difference between a bit depth upsampled reconstructed inter coded base layer image and an enhancement layer image, the residual comprising differential bit depth information.
